# EUROPÄISCHE PATENTSCHRIFT

(11) **EP 4 225 265 B1**
(45) Veröffentlichungstag und Bekanntmachung des Hinweises auf die Patenterteilung: **20.03.2024**
(21) Anmeldenummer: 20786546.0
(22) Anmeldetag: 06.10.2020
(51) Int. Cl.: A61K 8/898, C08K 5/1515, C08K 5/5435, C08L 83/08, C09D 183/08, D06N 3/12, C08G 77/08, C08G 77/18, C09D 183/04

(54) **VERFAHREN ZUR HERSTELLUNG VON ALKYLSILICONHARZEN**
METHOD FOR PRODUCING ALKYL SILICONE RESINS
PROCÉDÉ DE PRODUCTION DE RÉSINES DE SILICONE ALKYLÉE

(43) Veröffentlichungstag der Anmeldung: 16.08.2023
(73) Patentinhaber: Wacker Chemie AG, 81737 München (DE)
(72) Erfinder: STANJEK, Volker, 84539 Ampfing (DE); JANTKE, Dominik, 84489 Burghausen (DE); LÖSSEL, Georg, 84547 Emmerting (DE)
(74) Vertreter: Belz, Ferdinand
(86) Internationale Anmeldenummer: PCT/EP2020/077992
(87) Internationale Veröffentlichungsnummer: WO 2022/073587

(56) Entgegenhaltungen:
- WO-A1-2019/141377

## Beschreibung

Die Erfindung betrifft ein Verfahren zur Herstellung von Alkylsiliconharzen durch saure Hydrolyse von Alkylalkoxysilanen.

Siliciumorganische Verbindungen werden im Bautenschutz seit langem wegen ihrer hervorragenden Imprägnierwirkung gegen Wasser und Schmutz, ihrer Umweltverträglichkeit und ihrer physiologischen Unbedenklichkeit eingesetzt.

Die gängigen Imprägniermittel enthalten dabei Alkoxysilane mit einer hydrophoben Alkylgruppe, wobei Alkylgruppen mit 8 Kohlenstoffatomen, insbesondere n-Octylgruppen oder 1,4,4-Trimethylpentylgruppen, besonders gängig sind. Typische Vertreter derartiger hydrophobierend wirkender Silane sind das n-Octyl-triethoxysilan sowie das 1,4,4-Trimethylpentyl-triethoxysilan.

Grundsätzlich kann man dabei zwischen zwei Applikationsformen unterscheiden. Bei der ersten wird ein bereits bestehendes Bauwerk, z.B. eine Betonbrücke, eine Hausfassade oder ein Dachziegel nachträglich mit einer Beschichtungsformulierung hydrophobiert. Dabei kann das aufgetragene Beschichtungsmaterial zumindest bei porösen Baumaterialien auch in den Untergrund eindringen und somit zumindest eine gewisse Tiefenwirkung entfalten. Im Gegensatz zu ausschließlich oberflächlich aufgetragenen Farben oder Lacken, führen kleinere oberflächliche Beschädigungen somit nicht zwangsläufig zu einem Verlust der hydrophoben Schutzwirkung. Größere Beschädigungen jedoch oder auch Bohrlöcher, Schnitt-, Säge- oder Bruchkanten führen jedoch bei ausschließlich oberflächlich imprägnierten Materialien an den betroffenen Stellen zu einem Verlust der Schutzwirkung.

Während bei bereits existierenden Bauwerken eine nachträgliche oberflächliche Hydrophobierung meist die einzige praktikable Imprägniermethode darstellt, kann das Hydrophobiermittel bei der Herstellung von Bauteilen auf Basis hydraulischer Bindemittel, wie z.B. Beton oder Faserzement, bereits vor dem Abbindeprozess zugegeben werden. Diese sogenannte Massehydrophobierung hat den Vorteil, dass auf diese Weise das gesamte Volumen des Bauteils und nicht nur dessen Oberfläche mit einem wasserabweisenden Schutz versehen wird. Die Schutzwirkung geht somit nicht verloren, wenn das Bauteil beschädigt oder auch gezielt zersägt oder mit Bohrlöchern versehen wird. Zudem wird durch die Massehydrophobierung der zusätzliche Arbeitsschritt einer nachträglichen Beschichtung des ausgehärteten Bauteils eingespart.

Eine besondere Bedeutung unter den zu hydrophobierenden Bauelementen nehmen faserverstärkte Zementverbundwerkstoffe ein.

Zu deren Herstellung wird in der Regel eine stark verdünnte Schlämme aus Fasern und Zement, meist gewöhnlicher Portlandzement, zunächst zu Filmen von etwa 0,3 mm Dicke entwässert und anschließend bis zu der jeweils gewünschten Dicke auf eine Rolle gewickelt. Danach wird die aufgerollte Faserzementschicht aufgeschnitten und zu einer ebenen Platte abgeflacht, die dann in die jeweils gewünschte Form und Größe geschnitten werden kann. Die Aushärtung kann über mehrere Tage (typischerweise 1-2 Wochen) an der Luft oder auch deutlich schneller bei erhöhten Temperaturen durch sogenanntes Autoklavieren erfolgen. Bei dem letztgenannten Verfahren können dem Faserzement auch 40-60% Sand zugesetzt werden, der bei den erhöhten Autoklaventemperaturen mit dem Überschuss an Kalk im Zement unter Bildung von CalciumSilikat-Hydraten reagiert.

Als Fasern werden vor allem Asbest-, Cellulose-, Polyvinylacetat- (PVA-), Polyvinylalkohol- (PVOH-) oder Polypropylen-(PP-)Fasern verwendet. Aber auch Kohlenstoff- und Polyacrylnitrilfasern können verwendet werden. Hinsichtlich ihrer Eigenschaften weisen insbesondere Asbestfasern mehrere Vorteile auf, da sie nicht nur stark und steif sind, sondern sich als anorganische Materialien auch stark mit der Zementmatrix verbinden können. Anders als z.B. Cellulosefasern können Asbestfasern auch nicht verrotten.

Auf Grund der von Asbest ausgehenden Gesundheitsgefährdung ist dieses Fasermaterial jedoch insbesondere in den westlichen Industriestaaten auf dem Rückzug, in Europa und Nordamerika sind die entsprechenden Produkte bereits vollständig verschwunden.

Als gesundheitlich unbedenkliche Alternativen werden bei nicht autoklavierten Zementfaserplatten meist Kombinationen aus Cellulose-Fasern mit PVA-, PVOH-, PP- oder PET-Fasern verwendet. Da PVA-, PP und auch PET durch den Autoklavierschritt zerstört werden, wird bei diesem Verfahren in der Regel ausschließlich Cellulose als Alternative zum Asbest eingesetzt. Da Faserzementplatten ohne PVA, PP, PET und Asbest jedoch nur mäßige mechanische Eigenschaften besitzen, werden autoklavierte Produkte in Europa und Amerika vornehmlich zur Verkleidung von Fassaden eingesetzt, während für konstruktiv tragende Wand- oder Dachelemente meist nicht autoklavierte Produkte verwendet werden.

Insbesondere für Anwendungen im Außenbereich kommen in zunehmendem Maße hydrophobierte Faserzementplatten zum Einsatz, wobei sich auf Grund der oben beschriebenen Vorteile ein Trend weg von der nachträglichen Beschichtung hin zur Massehydrophobierung zeigt.

Dabei ist die Massehydrophobierung von Faserzementbauteilen mit Formulierungen, die neben anderen Bestandteilen auch Alkoxysilane mit einer hydrophoben Alkylgruppe enthalten, seit langem bekannt und wurde bereits im Jahr 1991 in DE 411449 beschrieben.

Nachteilig am Einsatz von Alkoxysilanen ist jedoch unter anderem die große Alkoholmenge, die während der Anwendung der Silane durch die Hydrolyse von deren Alkoxysilylgruppen freigesetzt wird. Im Falle der oben erwähnten Alkyltriethoxysilane, deren Alkylgruppe 8 Kohlenstoffatome enthalten, entspricht die Gewichtsmenge an freigesetztem Ethanol nahezu exakt 50% der eingesetzten Silanmenge.

Dies stellt insbesondere bei der Massehydrophobierung von Faserzement ein großes Problem dar, da dort, wie beschrieben, eine stark verdünnte Schlämme aus Fasern und Zement entwässert wird. Um übergroße Abwassermengen zu vermeiden, wird das bei der Entwässerung abgetrennte Prozesswasser in der Regel in den Prozess zurückgeführt. Wird dabei ein Silan zur Massehydrophobierung eingesetzt, verbleibt der freigesetzte, gut wasserlösliche Alkohol im Prozesswasser und reichert sich somit mit jedem Zyklus des in den Prozess zurückgeführten Wassers immer weiter an und würde sich nur durch technisch sehr aufwändige und in der Realität aus Kostengründen kaum praktikable Verfahren wieder entfernen lassen.

Zudem wurde gefunden, dass monomere Alkylalkoxysilane bei einem Einsatz zur Massenhydrophobierung nur eine mäßig gute Wirkung aufweisen.

Als Verbesserung wurde, wie WO 2019/141377 beschreibt, im Bautenschutz, insbesondere bei der Massehydrophobierung von Faserzement vorgeschlagen, anstelle von monomeren Alkylalkoxysilanen korrespondierende oligomere Alkylalkoxysilan-Harze einzusetzen. Dies hat zu einer entscheidenden Verbesserung geführt.

In WO 2019/141377 wird auch ein Verfahren zur Herstellung dieser Harze beschrieben, bei dem in einem kontinuierlichen Prozess ein entsprechendes monomeres Alkyltrichlorsilan mit einer Mischung aus Wasser und Alkohol zum oligomeren Alkylsiliconharz umgesetzt wird. Bei diesem Prozess entstehen extrem große Mengen an Chlorwasserstoff als Nebenprodukt. Dieses Verfahren kann zwar sehr kostengünstig sein, kann diesen Vorteil aber nur entfalten, wenn es auf einer sehr speziellen Anlage durchgeführt wird, wie sie in WO2019/141377 beschrieben ist. Steht diese Anlage nicht zur Verfügung, ist dieser Prozess schon auf Grund der extrem großen Mengen an freigesetztem - und idealerweise zu recyclierenden - Chlorwasserstoff aufwändig und damit wirtschaftlich wenig rentabel. Ebenso aufwändig und damit teuer sind auch ein risikoloser Transport sowie eine sichere Handhabung des als Edukt benötigten Alkyltrichlorsilans, welches bei Luftkontakt spontan Chlorwasserstoff freisetzen kann.

Hier wäre ein einfacher und schneller Prozess ausgehend von wesentlich unkritischeren monomeren Alkylalkoxysilanen wünschenswert, welche durch eine Reaktion mit einer geeigneten Wassermenge zu den entsprechenden Harzen oligomerisiert werden. Das Problem bei diesem chemischen Ansatz ist jedoch, dass zur Herstellung der gewünschten hydrophoben Alkylsiliconharze ebenso hydrophobe Alkylalkoxysilane benötigt werden. Logischerweise sind diese hydrophoben Alkylalkoxysilane nicht mit Wasser mischbar. Die entsprechende Reaktion muss somit in einem zweiphasigen System stattfinden, was stets lange Reaktionszeiten zur Folge hat, weil chemische Umsetzungen nur an den Phasengrenzen stattfinden können. Dies verschlechtert zum einen die Raum-Zeit-Ausbeute erheblich und kann zum anderen auch noch die Produktqualität negativ beeinträchtigen, da lange Reaktionszeiten mit erhöhten Temperaturen sowohl zu Nebenreaktionen wie auch zu unerwünschten Verfärbungen führen können. Und selbstverständlich wird auch ein Prozess gewünscht, bei dem das Produkt direkt ohne weitere Aufreinigung in hinreichend guter Qualität erhalten wird.

Aufgabe der Erfindung war daher die Bereitstellung eines Verfahrens zur Herstellung eines hydrophoben Alkylsiliconharzes (A), das die Nachteile und Beschränkungen der im Stand der Technik beschriebenen Verfahren nicht mehr aufweist.

Gegenstand der Erfindung ist ein Verfahren zur Herstellung von Alkylsiliconharzen (A) enthaltend mindestens 80 Gew.-% Einheiten der allgemeinen Formel (I)

R¹ₐ(R²O)_{b}(HO)_{d}R³_{c}SiO_{(4-a-b-c-d)/2} (I),

wobei
- R¹: gleich oder verschieden sein kann und einen einwertigen, SiC-gebundenen, unsubstituierten oder substituierten aliphatischen Kohlenwasserstoffrest mit maximal 4 Kohlenstoffatomen bedeutet,
- R²: gleich oder verschieden sein kann und Wasserstoff oder einen einwertigen, unsubstituierten oder substituierten Kohlenwasserstoffrest mit maximal 4 Kohlenstoffatomen bedeutet,
- R³: gleich oder verschieden sein kann und einen einwertigen, SiC-gebundenen, unsubstituierten oder substituierten Kohlenwasserstoffrest mit mindestens 5 Kohlenstoffatomen bedeutet,
- a: 0, 1, 2 oder 3 ist,
- b: 0, 1, 2 oder 3 ist und
- c: 0, 1 oder 2, ist, mit der Maßgabe, dass die Summe aus a+b+c kleiner oder gleich 3 ist und in mindestens 50 % der Einheiten der allgemeinen Formel (I) die Summe a+b gleich 0 oder 1 und in mindestens 40% der Einheiten der allgemeinen Formel (I) c gleich 1 ist,
- d: 0 oder 1 ist und

wobei der Gehalt an Alkoxygruppen R²O 3-20 Gew.-% beträgt,
bei dem Alkylalkoxysilan (A1) der allgemeinen Formel (II),

   R¹ₐR³_{c}Si(OR²)_{(4-a-c)} (II),

   wobei R¹, R², R³, a und c die oben genannten Bedeutungen aufweisen,
   in einem ersten Reaktionsschritt (R1) wahlweise mit einer reinen Säure (S) mit einem pKₛ-Wert von maximal 5, einer mindestens 5 Gew.-%-igen wässrigen Lösung einer Säure (S) mit einem pKₛ-Wert von maximal 5 oder einer Halogensilanverbindung (A2) der allgemeinen Formel (III) vermischt wird,

      R¹ₐR³_{c}Si(X)_{(4-a-c)} (III),
   wobei X für ein Halogenatom steht, und R¹, R³, a und c die oben genannten Bedeutungen aufweisen,
   und anschließend in mindestens einem weiteren Reaktionsschritt (R2) Wasser zugegeben wird.

Die gegebenenfalls eingesetzte Halogensilanverbindung (A2) setzt bei Kontakt mit Wasser spontan Halogenwasserstoff frei, und wirkt daher ähnlich wie ein direkter Zusatz der entsprechenden Halogenwasserstoffsäure.

Der pKₛ-Wert als Maß für die Stärke einer Säure ist dem Fachmann bekannt; eine geeignete Definition findet sich in "Grundlagen der allgemeinen und anorganischen Chemie", Hans-Rudolf Christen, 9. Auflage, 1988, Kapitel 10.3.

Bevorzugt wird eine Halogensilanverbindung (A2) oder eine Säure (S) mit einem pKₛ-Wert von maximal 3 eingesetzt, besonders bevorzugt eine Halogensilanverbindung (A2) oder Phosphor-, Phosphon-, Sulfon-, Schwefel- oder Halogenwasserstoffsäure, insbesondere bevorzugt eine Halogensilanverbindung (A2) oder eine Halogenwasserstoffsäure. Als Halogenwasserstoffsäure ist Chlorwasserstoffsäure bevorzugt.

Bevorzugt wird die Halogensilanverbindung (A2) oder die Säure (S) in einer Menge von 0,01 g bis 100 g, besonders bevorzugt in einer Menge von 0,1 g bis 25 g, insbesondere bevorzugt in einer Menge von 0,2 g bis 10 g jeweils bezogen auf 1000 g Alkoxysilan (A1) eingesetzt. Wird die Säure(S), was bevorzugt ist, als wässrige Lösung eingesetzt, beziehen sich diese Mengenangaben auf die reine Säure(S), die in der wässrigen Lösung vorhanden ist.

Wird eine Säure (S) eingesetzt, wird diese bevorzugt in Form einer wässrigen Lösung mit einer Säurekonzentration von mindestens 10 Gew.-%, besonders bevorzugt in einer Säurekonzentration von mindestens 15 Gew.-% und insbesondere bevorzugt in einer Säurekonzentration von mindestens 20 Gew.-% eingesetzt.

In einer bevorzugten Ausführung wird eine Halogensilanverbindung (A2) oder eine mindestens 5 Gew.-%ige, besonders bevorzugt eine mindestens 10 Gew.-%ige, insbesondere bevorzugt eine mindestens 20 Gew.-%ige wässrige Chlorwasserstoffsäure in einer Menge von 0,1 g bis 25 g, vorzugsweise von 0,2 g bis 10 g bezogen auf 1000 g Alkoxysilan (A1) eingesetzt, wobei sich die Mengenangabe auf die Halogensilanverbindung (A2) bzw. auf die reine Chlorwasserstoffsäure, die in der wässrigen Säurelösung vorhanden ist, bezieht.

In einer bevorzugten Ausführungsform ist es Teil des Reaktionsschrittes (R1), dass die Reaktionsmischung nach der Zugabe der Halogensilanverbindung (A2), der reinen Säure (S) oder der wässrigen Lösung der Säure (S) solange gerührt oder auf andere Weise gleichmäßig durchmischt wird, bis sich die Halogensilanverbindung (A2), die reine Säure (S) oder die wässrige Lösung der Säure (S) vollständig in der Reaktionsmischung gelöst hat und Letztere klar ist.

Bevorzugt wird der Reaktionsschritt (R1) bei Temperaturen zwischen 0 °C und 100 °C, besonders bevorzugt bei Temperaturen zwischen 10 °C und 100 °C, insbesondere zwischen 20 °C und 90 °C durchgeführt.

In einer bevorzugten Ausführungsform wird die Wasserzugabe im Reaktionsschritt (R2) so langsam durchgeführt, dass die Reaktionsmischung während der gesamten Wasserzugabe klar bleibt und sich keine Eintrübung zeigt.

In einer bevorzugten Ausführungsform ist es Teil des Reaktionsschrittes (R2), dass die Reaktionsmischung nach Ende der Wasserzugabe noch für 1 min bis 10 h, besonders bevorzugt für 5 min bis 5 h, insbesondere bevorzugt für 15 min bis 3 h, gleichmäßig durchmischt, insbesondere gerührt wird, um eine vollständige Reaktion zwischen dem zugesetzten Wasser und dem Silan (A1) zu erreichen.

Bevorzugt wird der Reaktionsschritt (R2) bei Temperaturen zwischen 0 °C und 100 °C, besonders bevorzugt bei Temperaturen zwischen 20 °C und 100 °C, insbesondere bevorzugt zwischen 40 °C und 90 °C durchgeführt.

Der Erfindung liegt die überraschende Entdeckung zugrunde, dass es beim Einsatz des erfindungsgemäßen Verfahrens möglich ist, die Reaktion zwischen dem Alkylalkoxysilan (A1) und Wasser, die sogenannte Silanhydrolyse, trotz der Hydrophobie des eingesetzten Silans (A1) ganz oder zumindest zu großen Teilen in einer einphasigen Reaktionsmischung durchzuführen. Die Einphasigkeit ist dabei erkennbar, da die Reaktionsmischung am Ende des Reaktionsschrittes (R1) klar ist und während der Wasserzugabe im zweiten Reaktionsschritt (R2) klar bleibt. Unter diesen Umständen verläuft die Reaktion sehr schnell, was nicht zuletzt an einer merklichen exothermen Erwärmung der Reaktionsmischung während der Wasserzugabe erkennbar ist.

Wenn man die als Katalysator eingesetzte Säure (S) und das Wasser hingegen nicht erfindungsgemäß nacheinander, sondern gemeinsam in Form einer in diesem Fall stärker verdünnten Säurelösung zu dem Alkoxysilan (A1) zugibt, erhält man die eigentlich zu erwartende 2-phasige Reaktionsmischung. In diesem Fall bleibt die Reaktionsmischung trüb, bis das zugegebene Wasser am Reaktionsende nahezu vollständig abreagiert ist. Auf Grund dieser Zweiphasigkeit sind selbst bei sehr intensiver Rührung Reaktionszeiten von >10 h erforderlich. Eine exotherme Erwärmung der Reaktionsmischung lässt sich ob des sehr langsamen Reaktionsfortschrittes nicht beobachten.

Dasselbe eigentlich erwartbare Ergebnis wird erzielt, wenn man zunächst Wasser und Alkoxysilan (A1) vermischt und die Reaktion anschließend durch die Zugabe einer katalytischen Säuremenge startet. Auch unter diesen Bedingungen bleibt die Reaktionsmischung zweiphasig und trüb, eine exotherme Erwärmung ist nicht zu beobachten, und es sind dieselben langen Reaktionszeiten erforderlich.

Schließlich findet man denselben wenig vorteilhaften Reaktionsverlauf auch dann, wenn man eine Mischung aus Wasser und dem sauren Katalysator vorlegt, und das Alkoxysilan (A1) zu dieser Mischung zudosiert.

Schließlich ist auch der Katalysatortyp von entscheidender Bedeutung. So sind normalerweise auch Basen perfekte und daher gängige Katalysatoren für die Silanhydrolyse und - kondensation. Setzt man bei der erfindungsgemäßen Reaktion statt der Säure jedoch einen basischen Katalysator ein, zeigt die Reaktionsmischung unabhängig von der konkreten Durchführung das eigentlich zu erwartende Verhalten und bleibt zweiphasig und trüb, bis das zugegebene Wasser am Reaktionsende nahezu vollständig abreagiert ist. Auch unter diesen Bedingungen sind sehr lange Reaktionszeiten erforderlich, und ob des langsamen Reaktionsfortschrittes lässt sich keine exotherme Erwärmung der Reaktionsmischung beobachten. Es ist bemerkenswert, dass bei basischer Katalyse im Gegensatz zu der erfindungsgemäßen sauren Katalyse auch die erfindungsgemäße Zugabereihenfolge und Reaktionsführung zu keinem besseren Ergebnis führt.

Als Rest R¹ werden nicht substituierte Reste bevorzugt, d.h. die Alkylreste, wie der Methyl-, Ethyl-, n-Propyl-, isoPropyl-, 1-n-Butyl-, 2-n-Butyl-, iso-Butyl-, tert.-Butyl-, wobei Methyl- und Ethylreste besonders und der Methylrest insbesondere bevorzugt werden.

Beispiele für Rest R² sind die für Rest R¹ angegebenen Bedeutungen. Bevorzugt handelt es sich bei Rest R² um gegebenenfalls mit Halogenatomen substituierte Alkylreste mit 1 bis 4 Kohlenstoffatomen, insbesondere um den Methyl- und Ethylrest.

Bevorzugt handelt es sich bei Rest R³ um nicht substituierte cyclische, verzweigte oder unverzweigte Alkylgruppen mit 6 bis 18 Kohlenstoffatomen. Beispiele für Reste R³ sind n-Hexyl, cyclo-Hexyl-, n-Octyl, 1,4,4-Trimethylpentyl-, Decyl-, Dodecyl-, Tetradecyl-, Hexadecyl-, oder Octadeclylreste.

Besonders bevorzugt handelt es sich bei den Resten R³ um Alkylgruppen mit 8 bis 16 Kohlenstoffatomen, insbesondere um n-Octyl-, 1,4,4-Trimethylpentyl- oder n-Hexadecylreste.

Die Alkylsiliconharze (A) enthalten vorzugsweise mindestens 90 Gew.-% Einheiten der allgemeinen Formel (I). Besonders bevorzugt besteht Komponente (A) ausschließlich aus Einheiten der allgemeinen Formel (I).

Bei den Alkylsiliconharzen (A) bedeuten vorzugsweise mindestens 90 Mol-% aller Reste R¹ Methylrest. Bei den Alkylsiliconharzen (A) bedeuten vorzugsweise mindestens 90 Mol-% aller Reste R² Methyl-, Ethyl-, Propyl- oder Isopropylrest. Bei den Alkylsiliconharzen (A) bedeuten vorzugsweise mindestens 90 Mol-% aller Reste R³ nicht substituierte Alkylgruppen mit 8 bis 16 Kohlenstoffatomen.

Bei den Alkylsiliconharzen (A) bedeuten jeweils unabhängig voneinander a bevorzugt 0 oder 1, b bevorzugt 0, 1 oder 2, c bevorzugt 0 oder 1 und d bevorzugt 0. Bevorzugt werden Alkylsiliconharze (A), die mindestens 40%, besonders bevorzugt mindestens 60%, Einheiten der allgemeinen Formel (I) aufweisen, in denen a gleich 0 und c gleich 1 ist, jeweils bezogen auf die Gesamtzahl an Einheiten der allgemeinen Formel (I). In einer besonderen Ausführungsform der Erfindung weisen die Alkylsiliconharze (A) ausschließlich Einheiten der Formel (I) auf, in denen a gleich 0 und c gleich 1 ist.

In einer Ausführung der Erfindung werden Alkylsiliconharze (A) eingesetzt, die, jeweils bezogen auf die Gesamtzahl an Einheiten der allgemeinen Formel (I), höchstens 50%, besonders bevorzugt höchstens 40%, ganz besonders bevorzugt höchstens 20% Einheiten der allgemeinen Formel (I) aufweisen, in denen a für den Wert 2 steht.

Bevorzugt sind Alkylsiliconharze (A), die, jeweils bezogen auf die Gesamtzahl an Einheiten der allgemeinen Formel (I), 8 bis 65 %, insbesondere 10 bis 45 %, ganz besonders 12 bis 16 % Einheiten der allgemeinen Formel (I) aufweisen, in denen b für den Wert 0 steht.

Bevorzugt sind Alkylsiliconharze (A), die, jeweils bezogen auf die Gesamtzahl an Einheiten der allgemeinen Formel (I), 30 bis 70 %, insbesondere 45 bis 63 % Einheiten der allgemeinen Formel (I) aufweisen, in denen b für den Wert 1 steht.

Bevorzugt sind Alkylsiliconharze (A), die, jeweils bezogen auf die Gesamtzahl an Einheiten der allgemeinen Formel (I), 5 bis 45%, insbesondere 22 bis 40 Einheiten der allgemeinen Formel (I) aufweisen, in denen b für den Wert 2 steht.

Bevorzugt sind Alkylsiliconharze (A), die, jeweils bezogen auf die Gesamtzahl an Einheiten der allgemeinen Formel (I), 0 bis 5 %, besonders bevorzugt 0 bis 2 %, insbesondere 0 bis 1 % Einheiten der allgemeinen Formel (I) aufweisen, in denen b für den Wert 3 steht.

Bevorzugt sind Alkylsiliconharze (A), die, jeweils bezogen auf die Gesamtzahl an Einheiten der allgemeinen Formel (I), mindestens 80%, besonders bevorzugt mindestens 90 %, insbesondere mindestens 95% Einheiten der Formel (I) aufweisen, in denen d gleich 0 ist.

Beispiele für die Alkylsiliconharze (A) sind Organopolysiloxanharze, die zu mindestens 95%, vorzugsweise ausschließlich, aus (Q)-Einheiten der Formeln SiO_{4/2}, Si(OR⁴)O_{3/2}, Si(OR⁴)₂O_{2/2} und Si(OR⁴)₃O_{1/2}, (T)-Einheiten der Formeln Alk-SiO_{3/2}, AlkSi(OR⁴)O_{2/2} und Alk-Si(OR⁴)₂O_{1/2}, Me-SiO_{3/2}, Me-Si(OR⁴)O_{2/2} und Me-Si(OR⁴)₂O_{1/2}, (D)-Einheiten der Formeln Me₂SiO_{2/2} und Me₂Si(OR⁴)O_{1/2} sowie (M)-Einheiten der Formel Me₃SiO_{1/2} bestehen, wobei Me für einen Methylrest, Alk für einen unsubstituierten Alkylrest mit 8 bis 16 Kohlenstoffatomen und R⁴ für Alkylreste mit 1 bis 4 Kohlenstoffatomen, steht, wobei das Harz pro Mol (T)-Einheiten bevorzugt 0-2 Mol (Q)-Einheiten, 0-2 Mol (D)-Einheiten und 0-2 Mol (M)-Einheiten enthält.

Bevorzugte Beispiele für die Alkylsiliconharze (A) sind Organopolysiloxanharze, die zu mindestens 95%, vorzugsweise ausschließlich, aus T-Einheiten der Formeln AlkSiO_{3/2}, AlkSi (OR⁴)O_{2/2} und AlkSi (OR⁴)₂O_{1/2} sowie T-Einheiten der Formeln MeSiO_{3/2}, MeSi(OR⁴)O_{2/2} und MeSi(OR⁴)₂O_{1/2} sowie D-Einheiten der Formeln Me₂SiO_{2/2} und Me₂Si(OR⁴)O_{1/2} bestehen, wobei Me, Alk und R⁴ die oben genannte Bedeutung aufweisen, und die molaren Verhältnisse von (T)- zu (D)-Einheiten zwischen 1,0 bis 10,0 liegen.

Weitere bevorzugte Beispiele für die Alkylsiliconharze (A) sind Organopolysiloxanharze, die zu mindestens 95%, vorzugsweise ausschließlich, aus T-Einheiten der Formeln AlkSiO_{3/2}, AlkSi(OR⁴)O_{2/2} und AlkSi(OR⁴)₂O_{1/2} sowie T-Einheiten der Formeln MeSiO_{3/2}, MeSi(OR⁴)O_{2/2} und MeSi(OR⁴)₂O_{1/2} bestehen, wobei Me, Alk und R⁴ die oben genannte Bedeutung aufweisen, mit einem molaren Verhältnis von Alk- zu Me-Einheiten von 0,5 bis 4,0.

Zusätzliche bevorzugte Beispiele für die Alkylsiliconharze (A) sind Organopolysiloxanharze, die zu mindestens 95%, vorzugsweise ausschließlich, aus T-Einheiten der Formeln AlkSiO_{3/2}, AlkSi(OR⁴)O_{2/2} und AlkSi(OR⁴)₂O_{1/2} bestehen, wobei Alk und R⁴ die oben genannte Bedeutung aufweisen.

Ganz besonders bevorzugte Beispiele für die Alkylsiliconharze (A) sind Organopolysiloxanharze, die eine der in den voranstehenden vier Absätzen beschriebene Zusammensetzung aufweisen, wobei Alk für n-Octyl-, 1,4,4-Trimethylpentyl- oder n-Hexadecylreste, insbesondere für n-Octyl- oder 1,4,4-Trimethylpentylreste, steht.

Vorzugsweise besitzen die Alkylsiliconharze (A) eine mittlere Molmasse (Zahlenmittel) Mₙ von mindestens 400 g/mol und besonders bevorzugt von mindestens 600 g/mol. Die mittlere Molmasse Mₙ liegt vorzugsweise bei höchstens 400 000 g/mol, besonders bevorzugt bei höchstens 100 00 g/mol, insbesondere bei höchstens 1 500 g/mol.

Die Bestimmung der Molmasse erfolgt mittels GPC. Gerät Iso Pump Agilent 1200, Autosampler Agilent 1200, Säulenofen Agilent 1260 Detektor, RID Agilent 1200, Säule Agilent 300 x 7,5 mm OligoPore Ausschluss 4500D, Säulenmaterial highly crosslinked Polystyrene/Divinylbenzene, 25 Eluent Toluol, Flussrate 0,7 ml/min, Injektionsvolumen 10 µl, Konzentration 1 g/l (in Toluol), PDMS (Polydimethylsiloxan)-Kalibrierung (Mp 28500 D Mp 25200 D, Mp 10500 D, Mp 5100 D, Mp 4160 D, Mp 1110 D, Mp 311D).

Die Alkylsiliconharze (A) können bei 23°C und 1000 hPa sowohl fest als auch flüssig sein, wobei die Alkylsiliconharze (A) bevorzugt flüssig sind. Vorzugsweise besitzen die Siliconharze (A) eine Viskosität von 10 bis 100 000 mPas, vorzugsweise von 50 bis 1 000 mPas, insbesondere von 100 bis 500 mPas.

Die Viskosität wird im Rahmen der vorliegenden Erfindung nach einer Temperierung auf 23°C mit einem DV 3 P-Rotationsviskosimeter von Fa. A. Paar (Brookfieldsystem), unter Verwendung von Spindel 5 bei 2,5 UpM entsprechend der ISO 2555 bestimmt.

Im ersten Reaktionsschritt (R1) können reine Alkylalkoxysilane (A1) oder auch mehrere Alkoxysilane (A1) der allgemeinen Formel (II) eingesetzt werden.

In einer bevorzugten Ausführungsform des erfindungsgemäßen Verfahrens, folgt nach den erfindungsgemäßen Reaktionsschritten (R1) und (R2) ein weiterer Reaktionsschritt (R3), bei dem eine Base (B) in einer Menge zugegeben wird, die größer ist als die Menge an Base (B), die notwendig wäre, um die zum Zugabezeitpunkt der Base (B) in der Reaktionsmischung vorhandene Menge an Säure (S) oder die zu diesem Zeitpunkt vorhandene, aus der Halogensilanverbindung (A2) freigesetzte Menge Halogenwasserstoff vollständig zu neutralisieren.

Die Base (B) weist dabei vorzugsweise einen pK_{b}-Wert von maximal 5 und besonders bevorzugt einen pK_{b}-Wert von maximal 3,6 auf. Insbesondere bevorzugt handelt es sich bei der Base (B) um ein Alkali- oder Erdalkalihydroxid oder -carbonat, wobei der Einsatz eines Alkalihydroxids, wie Natriumhydroxid und Kaliumhydroxid ganz besonders vorteilhaft ist.

Ebenfalls bevorzugt wird als Base (B) ein Alkalialkoholat eingesetzt, besonders bevorzugt Natriumalkanolat und Kaliumalkanolat, insbesondere Natriumethanolat und Kaliummethanolatat.

Der pK_{b}-Wert als Maß für die Stärke einer Base ist dem Fachmann bekannt; eine geeignete Definition findet sich in "Grundlagen der allgemeinen und anorganischen Chemie", Hans-Rudolf Christen, 9. Auflage, 1988, Kapitel 10.3.

Die Base (B) kann dabei in reiner Form oder in Form einer wässrigen oder alkoholischen Lösung eingesetzt werden. Sofern es sich bei der Base (B) um einen Feststoff handelt, wird eine Zugabe in Form einer wässrigen Lösung bevorzugt. Insbesondere werden die Alkalialkoholate als alkoholische Lösungen eingesetzt. Wird die Base (B) in Form einer wässrigen oder alkoholischen Lösung eingesetzt, so wird eine Konzentration der Base (B) in dieser Lösung von mindestens 5 Gew.-% bevorzugt, wobei eine Konzentration von mindestens 10 Gew.-% besonders bevorzugt und eine Konzentration von mindestens 15 Gew.-% insbesondere bevorzugt wird. Die jeweiligen Konzentrationsobergrenzen sind durch die maximale Löslichkeit der Base (B) gegeben.

In einer bevorzugten Ausführungsform ist es Teil des Reaktionsschrittes (R3), dass die Reaktionsmischung nach Ende der Zugabe der Base (B) für eine Zeitdauer von 1 min bis 20 h besonders bevorzugt für 5 min bis 5 h, insbesondere bevorzugt für 15 min bis 3 h gerührt oder auf andere Weise gleichmäßig durchmischt wird.

Vorzugsweise weist die Reaktionsmischung am Ende von Reaktionsschritt (R3) einen pH-Wert von mindestens 6,0, besonders bevorzugt bei mindestens 6,5 und insbesondere bevorzugt von mindestens 7 auf.

Bevorzugt wird der Reaktionsschritt (R3) bei Temperaturen zwischen 0 °C und 100 °C, besonders bevorzugt bei Temperaturen zwischen 20 °C und 100 °C, insbesondere bevorzugt zwischen 40 °C und 90 °C durchgeführt.

Diese bevorzugte Ausführungsform beruht auf einer weiteren überraschenden Entdeckung, nach der die Reaktion zwischen dem Silan (A1) und Wasser, die sogenannte Silanhydrolyse, zwar mit der erfindungsgemäßen sauren Katalyse in einer einphasigen Reaktionsmischung und damit besonders gut durchführbar ist, dass unter sauren Bedingungen aber eine vergleichsweise große Anzahl der durch die Silanhydrolyse gebildeten Silanol-Funktionen (Si-OH-Gruppen) nicht, bzw. nur sehr langsam kondensiert.

Dies ist nachteilig, da so ein relativ großer Anteil an Silanol-Funktionen im Endprodukt (A) verbleibt. Während der Lagerung können diese Silanol-Gruppen langsam mit den Alkoxygruppen des erfindungsgemäßen Harzes (A) unter Bildung von Si-O-Si-Brücken und der Freisetzung von Alkohol R²OH reagieren. Da letzterer in der Regel gut brennbar ist, senkt das den Flammpunkt des resultierenden, nun mit Alkohol verunreinigten Harzes (A). Dies ist für den Endanwender der Alkylsiliconharze (A), meist ein Hersteller zementärer Produkte wie Faserzementplatten, der für einen Umgang mit entflammbaren Substanzen nicht ausgestattet ist, in der Regel ein ernstes Problem.

Der pH-Wert im Reaktionsschritt (R3) muss dabei nicht zwangsläufig größer als 7 sein, entscheidend ist lediglich, dass die Menge der Base (B) größer ist als die Menge, die notwendig wäre, um die beim Zugabezeitpunkt der Base (B) in der Reaktionsmischung noch vorhandene Menge an Säure mit Ausnahme der ebenfalls sauren Silanol-Gruppen zu neutralisieren.

Die im Überschuss zugegebene Base (B) reagiert mit einem Teil der in der Reaktionsmischung vorhandenen Si-OH-Gruppen, so dass sich die Reaktionsmischung letztendlich in dem pH-Bereich eines Silanol-Silanolat-Puffersystems befindet. Überraschenderweise wurde jedoch festgestellt, dass bereits unter diesen Bedingungen, d.h. auch bei pH-Werten deutlich kleiner 7 die vorhandenen Silanolatgruppen zügig mit den im Harz (A) vorhandenen Alkoxysilylgruppen (R²O-Si-Gruppen) und gegebenenfalls auch mit den ebenfalls vorhandenen Silanolgruppen unter Ausbildung von Si-O-Si-Brücken kondensieren. D.h., auch unter den Bedingungen eines Silanol-Silanolat-Puffersystems, d.h. bei pH-Werten unter 7, kommt es zu einem zügigen Abbau der noch vorhandenen Silanolgruppen.

In vielen Fällen tritt daher auch das Phänomen auf, dass die Reaktionsmischung direkt nach der Zugabe der Base (B) noch einen pH-Wert deutlich unter 6, gegebenenfalls sogar deutlich unter 5 aufweist, der dann aber von alleine, d.h. auch ohne Zugabe von weiterer Base (B) auf einen Wert von größer als 6,0, vorzugsweise 6,5 und insbesondere von mindestens 7 am Ende des Reaktionsschrittes (R3) ansteigt. Dies geschieht meist innerhalb 1 bis maximal 60 min, meist innerhalb von 1 bis maximal 15 min.

In einer besonders bevorzugten Ausführungsform (AF1) wird der Reaktionsschritt (R3) durchgeführt, indem der Reaktionsmischung nach Abschluss der Reaktionsschritte (R1) und (R2) die Base (B) in einer Menge zugegeben wird, die größer ist als die Menge, die notwendig wäre, um die in Reaktionsschritt (R1) eingesetzte Säure (S) bzw. den aus der in Reaktionsschritt 1 eingesetzten Halogensilanverbindung (A2) freigesetzten Halogenwasserstoff vollständig zu neutralisieren.

Vorzugsweise wird der während des erfindungsgemäßen Verfahrens freigesetzte Alkohol R²OH in einem weiteren Verfahrensschritt (R4) destillativ entfernt.

Die Destillation wird vorzugsweise bei einer Sumpftemperatur von 60 °C bis 150 °C und besonders bevorzugt von 70 °C bis 120 °C durchgeführt.

Die Destillation wird vorzugsweise bei einem Druck von 0,01 mbar bis Raumdruck, besonders bevorzugt zumindest teilweise bei einem reduzierten Druck von 0,1 mbar bis 100 mbar und insbesondere bevorzugt zumindest teilweise bei einem Druck von 1 mbar bis 50 mbar durchgeführt.

Das hergestellte Alkylsiliconharz (A) weist vorzugsweise einen Alkoholgehalt von maximal 2 Gew.-%, besonders bevorzugt von maximal 1 Gew.-% und insbesondere bevorzugt von maximal 0,5 Gew.-% auf.

Wird die besonders bevorzugte Ausführungsform (AF1) des erfinderischen Verfahrens durchgeführt, so wird die gesamte freigesetzte Alkoholmenge vorzugsweise nach Abschluss des Reaktionsschrittes (R3) abdestilliert. Auf diese Weise ist nur ein einziger Destillationsschritt erforderlich, um die oben genannten bevorzugten niedrigen Alkoholgehalte im Alkylsiliconharz (A) zu erreichen.

Selbstverständlich ist es vorstellbar, dass bereits nach Abschluss des Verfahrensschrittes (R2) ein Destillationsschritt eingeschoben wird. Dies hat aber den Nachteil, dass der im Verfahrensschritt (R3) freigesetzte Alkohol (R²OH) entweder nicht entfernt wird oder aber ein weiterer Destillationsschritt nach dem Reaktionsschritt (R3) erforderlich ist. Daher wird diese Vorgehensweise bei der Ausführungsform (AF1) nicht bevorzugt.

Ebenso ist denkbar, dass bereits während des Verfahrensschrittes (R2) ein Teil des entstehenden Alkohols (R²OH) destillativ entfernt wird. Da dabei aber auch noch nicht abreagiertes Wasser mit abdestillieren kann, ist es unter diesen Bedingungen schwierig, die in der Reaktionsmischung verbleibende Wassermenge und damit den resultierenden Oligomerisierungsgrad des Alkylsiliconharzes (A) hinreichend genau zu regulieren. Daher wird auch diese Vorgehensweise bei der Ausführungsform (AF1) nicht bevorzugt.

Wird die besonders bevorzugte Ausführungsform (AF1) des erfinderischen Verfahrens durchgeführt, so kann der am Ende des Verfahrensschrittes (R3) erhaltene pH-Wert in einem weiteren Verfahrensschritt (R5) durch Zugabe einer Säure oder Base in einen weitgehend neutralen Bereich, besonders bevorzugt einen pH-Wert von 6,5 bis 7,5 eingestellt werden. Dies ist insbesondere dann bevorzugt, wenn im Verfahrensschritt (R3) eine so große Basenmenge eingesetzt wurde, dass die erhaltene Reaktionsmischung einen pH-Wert >7,5 aufweist. Der Verfahrensschritt (R5) kann dabei sowohl vor als auch nach der Destillation (R4) durchgeführt werden.

Wird die bevorzugte Ausführungsform (AF1) des erfinderischen Verfahrens durchgeführt, so wird das durch die Basenzugabe im Verfahrensschritt (R3) sowie gegebenenfalls auch das durch die Neutralisation (R5) erhaltene Salz vorzugsweise durch einen Filtrationsschritt (R6) entfernt. Der Filtrationsschritt (R6) kann dabei sowohl nach als auch vor dem Destillationsschritt (R4) und/oder der Neutralisation (R5) erfolgen. Vorzugsweise handelt es sich bei der Filtration um den letzten Verfahrensschritt.

Gegebenenfalls kann die Filtration (R6) unter Zuhilfenahme eines Filterhilfsmittels durchgeführt werden. Filterhilfsmittel sind chemisch inerte Stoffe, die physikalischmechanisch eine Filtration unterstützen. Filterhilfsmittel werden eingesetzt, um den eigentlichen Filter oder Filtereinsatz leichter reinigen zu können oder um zu verhindern, dass Feststoffe aus der Suspension den Filter verstopfen oder in das Filtrat geraten. Hier können sämtliche gängigen Filterhilfsmittel verwendet werden. Beispiele für häufig verwendete Filterhilfsmittel sind Cellulose, Kieselgel, Kieselgur oder Perlit.

In einer weiteren besonders bevorzugten Ausführungsform (AF2) wird der Reaktionsschritt (R3) durchgeführt, indem
- im Reaktionsschritt (R1) eine Halogensilanverbindung (A2) oder eine Halogenwasserstoffsäure eingesetzt wird, wobei wässrige Chlorwasserstoffsäure mit einer Säurekonzentration von mindesten 5 Gew.-% oder eine Chlorsilanverbindung (A2), d.h. eine Verbindung der Formel (III), in der X für ein Chloratom steht, insbesondere bevorzugt werden,
- während oder vorzugsweise nach Abschluss von Reaktionsschritt (R2) mindestens 30%, bevorzugt mindestens 60 %, besonders bevorzugt mindestens 80 %, insbesondere bevorzugt mindestens 90 % der in den vorangegangenen Reaktionsschritten freigesetzten Alkoholmenge (R²OH) in einem Reaktionsschritt destillativ entfernt wird, wobei zumindest teilweise, vorzugsweise ein Großteil des im Reaktionsgemisch befindlichen Halogenwasserstoffes mit abdestilliert,
- und anschließend die Base (B) in einer Menge zugegeben wird, die größer ist als die Menge, die notwendig wäre, um die in der Reaktionsmischung verbliebene Menge an Halogenwasserstoffsäure vollständig zu neutralisieren.

Vorzugsweise wird die destillative Entfernung des Alkohols (R²OH) und der Halogenwasserstoffsäure so durchgeführt, dass weniger als 1000 ppm, besonders bevorzugt weniger als 500 ppm Halogenwasserstoffsäure in der Reaktionsmischung zurückbleiben. Dies gelingt besonders einfach, wenn es sich bei der Halogenwasserstoffsäure um Chlorwasserstoffsäure handelt, d.h. in Reaktionsschritt 1 Chlorwasserstoffsäure oder ein Chlorsilan (A2) eingesetzt wird und die Destillation so durchgeführt wird, dass die resultierende Reaktionsmischung weniger als 5 Gew.-%, bevorzugt weniger als 1-Gew.-% Alkohol (R²OH) enthält.

Die Destillation wird vorzugswiese bei einer Sumpftemperatur von 60 °C bis 150 °C und besonders bevorzugt von 70 °C bis 120 °C durchgeführt.

Die Destillation wird vorzugswiese bei einem Druck von 0,01 mbar bis Raumdruck, besonders bevorzugt zumindest teilweise bei einem reduzierten Druck von 0,1 mbar bis 100 mbar und insbesondere bevorzugt zumindest teilweise bei einem Druck von 1 mbar bis 50 mbar durchgeführt.

Auch bei der bevorzugten Ausführungsform (AF2) wird nach Ende des Verfahrensschrittes (R3) in einem weiteren Destillationsschritt (R4) sämtlicher noch in der Reaktionsmischung vorhandene Alkohol R²OH destillativ entfernt. Dies ist selbst dann zu bevorzugen, wenn bei der vorangehenden gemeinsamen destillativen Entfernung von Alkohol und Säure der erfindungsgemäß bevorzugte sehr niedrige Alkoholgehalt erreicht worden ist, da während des Verfahrensschrittes (R3) durch die während dieses Verfahrensschrittes stattfindenden Kondensationsreaktionen erneut Alkohol (R²OH) gebildet wird.

Diese Destillation (R4) wird dabei genauso durchgeführt wie oben dargestellt, und es wird ein Produkt (A) mit den oben genannten bevorzugten und besonders bevorzugten niedrigen Alkoholgehalten erhalten.

Auch bei der besonders bevorzugten Ausführungsform (AF2) können ein Neutralisationsschritt (R5) und/oder ein Filtrationsschritt (R6) durchgeführt werden. Deren Durchführung kann ebenso erfolgen, wie dies bei der Ausführungsform (AF1) beschrieben wurde. Auch die Reihenfolge der verschiedenen Verfahrensschritte (R4), (R5) und (R6) kann ebenso wie bei der bevorzugten Ausführungsform (AF2) beliebig variiert werden.

Vorzugsweise wird bei der besonders bevorzugten Ausführungsform (AF2) jedoch auf die Verfahrensschritte (R5) und (R6) verzichtet. Auf den Verfahrensschritt (R5) kann in der Regel verzichtet werden, da im Verfahrensschritt (R3) nur noch eine sehr geringe Basenmenge zugegeben werden muss, so dass es bei geeigneter Durchführung des Verfahrens auch ohne zusätzlichen Neutralisationsschritt gelingt, ein Endprodukt (A) zu erhalten, das auf Grund des oben beschriebenen Silanol-Silanolat-Puffers einen pH-Wert zwischen 6,5 und 7,5 aufweist. Und auf den Verfahrensschritt (R6) kann in der Regel verzichtet werden, da die im Verfahrensschritt (R3) gebildete Salzmenge extrem klein und somit in der Anwendung nicht mehr störend ist.

Die erfindungsgemäß hergestellten Alkylsiliconharze (A) werden vor allem zur Massenhydrophobierung von Faserzement verwendet. Diese Verwendung, die verschiedenen Verwendungsformen sowie die Vorteile, die sich aus dieser Verwendung ergeben, sind in WO 2019/141377 beginnend auf S. 15, Z. 21 bis S. 20, Z. 27 sowie auch in den Beispielen im Detail beschrieben. Die entsprechende Passage sowie die Beispiele aus WO 2019/141377 sind daher dem Offenbarungsgehalt der vorliegenden Patentschrift zuzurechnen.

In den nachstehend beschriebenen Beispielen beziehen sich alle Viskositätsangaben auf eine Temperatur von 23 °C. Sofern nicht anders angegeben, werden die nachstehenden Beispiele bei einem Druck der umgebenden Atmosphäre, also etwa bei 1000 hPa, und bei Raumtemperatur, also bei etwa 23 °C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50% durchgeführt. Des Weiteren beziehen sich alle Angaben von Teilen und Prozentsätzen, soweit nichts anderes angegeben ist, auf das Gewicht.

### Beispiele

### Beispiel 1: Erfindungsgemäße Durchführung der besonders bevorzugten Ausführungsform (AF1)

### Apparatur:

Die Reaktion wird in einem 1000 ml Dreihalskolben mit Heiz möglichkeit (Ölbad mit Magnetrührer), KPG-Rührer, Tropftrichter und Rückflusskühler durchgeführt.

In den Reaktionsschritten (R1) bis (R3) eingesetzte Chemikalien:

| | | |
|---|---|---|
| • | 600,0 g | 1,4,4-Trimethylpentyl-triethoxysilan (2,17 mol) |

| | | |
|---|---|---|
| • | 2,5 g | 25 Gew.-%ige wässrige Salzsäure (0,017 mol HCl, 0,104 mol H₂O) |
| • | 40,6 g | Wasser (2,26 mol) |
| • | 3,0 g | 50 Gew.-%ige wässrige Natriumhydroxidlösung (0,038 mol NaOH, 0,083 mol H₂O) |

### Durchführung

600,0 g 1,4,4-Trimethylpentyl-triethoxysilan werden vorgelegt und auf 65 °C erwärmt. Bei dieser Temperatur werden 2,5 g 25 %-ige wässrige HCl unter intensiver Rührung innerhalb von 20 min gleichmäßig zudosiert, wobei sich die Reaktionsmischung zunächst leicht eintrübt (2-Phasensystem). Es wird für 10 min bei 65 °C nachgerührt, wobei die Reaktionsmischung wieder klar wird.

Danach werden bei unveränderter Temperatur 40,6 g Wasser innerhalb von 30 min zudosiert. Es setzt eine erkennbar exotherme Reaktion ein, durch die die Reaktionstemperatur auf ~70 °C ansteigt. Um die Temperatur auf 70 °C zu begrenzen, wird die Reaktionsmischung ab dem Erreichen dieser Temperatur gekühlt. Die Reaktionsmischung bleibt die gesamte Zeit über klar. Nach Dosierende wird für 60 min bei 65 °C nachgerührt.

Danach wird bei unveränderter Temperatur durch Zugabe einer 50 %-igen wässrigen Natriumhydroxid-Lösung (3,0 g) ein pH-Wert von ~9-10 eingestellt. Dabei fällt Natriumchlorid als weißer Feststoff aus, die Reaktionsmischung bleibt jedoch einphasig. Anschließend wird für 30 min bei unverändert 65 °C gerührt.

Man kühlt auf Raumtemperatur ab und neutralisiert durch Zugabe von 25 %-iger HCl (2,1 g) auf pH 7. Es wird für weitere 30 min gerührt, wobei sich der pH-Wert eventuell erneut erhöht. In diesem Fall muss durch Zugabe kleiner Säuremengen der pH erneut auf 7 eingestellt werden.

Nach Austausch des Rückflusskühlers durch einen Claisen-Kühler mit kurzer Kolonne (ca. 1-2 Böden) werden die Leichtsieder bei einer Ölbadtemperatur von 120 °C und Normaldruck abdestilliert, bis kein weiteres Destillat mehr anfällt. Die Sumpftemperatur steigt dabei kontinuierlich bis auf 110 °C an. Dabei werden -225 g Destillat erhalten. Danach wird der Druck auf 10 mbar reduziert, wobei weitere ~5 g Destillat erhalten werden. Nach ~15 min fällt auch bei diesem Druck kein weiteres Destillat mehr an, und der Druck wird auf 5 mbar reduziert. Unter diesen Bedingungen werden für weitere 30 min auch kleinste Ethanol- und/oder Wasserreste aus der Reaktionsmischung entfernt.

Es werden 406 g Rückstand in Form einer farblosen Flüssigkeit erhalten, die das gebildete Natriumchlorid als weißen Feststoff enthält.

### Filtration:

10 g Filterhilfe Seitz EF werden zu dem zu filtrierenden Material gegeben (ca. 2,5 Gew%) und durch Rühren homogen verteilt.

Nach der Homogenisierung der Filterhilfe wird die Suspension bei Raumtemperatur in eine Druckfilternutsche auf Filtermaterial K100 gegeben, geschlossen und mit Druckluft (ca. 5 bar) beaufschlagt.

Das Filtrat beginnt nach kurzer Zeit in das entsprechende Auffanggefäß abzufließen. Dabei ist es von Anfang an klar. Die Druckluftbeaufschlagung wird solange fortgesetzt, bis nichts mehr abfließt.

Danach wird die Druckluft abgeschaltet, die Druckfilternutsche entspannt und die Filternutsche erst danach zwecks Reinigung geöffnet.

### Charakterisierung des Endproduktes (Alkylsiliconharz (A)):

Das Endprodukt ist eine klare Flüssigkeit mit einer Viskosität, gemessen nach der in der Beschreibung angegebenen Methode, von 185 mPas.

Das Endprodukt wird mittels ¹H und ²⁹Si-NMR Verteilung analysiert, wobei der Gehalt an Ethoxygruppen, die Verteilung der Si-Einheiten auf die verschiedenen Kondensationsstufen, der Gehalt der im Produkt verbliebenen Silanolgruppen sowie der im Produkt verbliebene Gehalt an freiem Ethanol bestimmt wird. Dabei ergibt sich das folgende Ergebnis:

| | |
|---|---|
| Ethoxy-Gehalt: | 13,4 Gew.-% (bezogen auf das Gesamtgewicht des Endproduktes) |
| Silanol-Gehalt: | 94 ppm (berechnet als O_{1/2}H (Molgewicht = 9) bezogen auf das Gesamtgewicht des Endproduktes) |
| Ethanolgehalt: | 0,03 Gew.-% (bezogen auf das Gesamtgewicht des Endproduktes) |

Verteilung der Si-Einheiten auf die verschiedenen Kondensationsstufen:

| | |
|---|---|
| Si(OEt)₃-Einheiten: | 0,8 Mol-% (monomeres Silan) |
| Si(OEt)₂O_{1/2}-Einheiten: | 16,2 Mol-% |
| Si(OEt)O_{2/2}-Einheiten: | 55,6 Mol-% |
| SiO_{3/2}-Einheiten: | 27,4 Mol-% |

### Beispiel 2: Erfindungsgemäße Durchführung der besonders bevorzugten Ausführungsform (AF1)

Es wird genauso vorgegangen wie in Beispiel 1 mit dem einzigen Unterschied, dass anstelle von 600,0 g 1,4,4-Trimethylpentyl-triethoxysilan dieselbe Menge n-Octyl-triethoxysilan eingesetzt wird. Dabei hat sich exakt derselbe Reaktionsverlauf gezeigt.

### Charakterisierung des Endproduktes (Alkylsiliconharz (A)):

Das Endprodukt ist eine klare Flüssigkeit mit einer Viskosität, gemessen nach der in der Beschreibung angegebenen Methode, von 223 mPas.

Das Endprodukt wird mittels ¹H und ²⁹Si-NMR Verteilung analysiert, wobei der Gehalt an Ethoxygruppen, die Verteilung der Si-Einheiten auf die verschiedenen Kondensationsstufen, der Gehalt der im Produkt verbliebenen Silanolgruppen sowie der im Produkt verbliebene Gehalt an freiem Ethanol bestimmt wird. Dabei ergibt sich das folgende Ergebnis:

| | |
|---|---|
| Ethoxy-Gehalt: | 13,8 Gew.-% (bezogen auf das Gesamtgewicht des Endproduktes) |
| Silanol-Gehalt: | 35 ppm (berechnet als O_{1/2}H (Molgewicht = 9) bezogen auf das Gesamtgewicht des Endproduktes) |
| Ethanolgehalt: | 0,10 Gew.-% (bezogen auf das Gesamtgewicht des Endproduktes) |

Verteilung der Si-Einheiten auf die verschiedenen Kondensationsstufen:

| | |
|---|---|
| Si(OEt)₃-Einheiten: | 1,0 Mol-% (monomeres Silan) |
| Si(OEt)₂O_{1/2}-Einheiten: | 18,3 Mol-% |
| Si(OEt)O_{2/2}-Einheiten: | 50,3 Mol-% |
| SiO_{3/2}-Einheiten: | 30,4 Mol-% |

### Beispiel 3: Erfindungsgemäße Durchführung der besonders bevorzugten Ausführungsform (AF1)

Es wird genauso vorgegangen wie in Beispiel 1 mit den folgenden Unterschieden:
- Anstelle von 2,5 g einer 25 Gew.-%-igen wässrigen Salzsäure werden im Reaktionsschritt (R1) 2,0 g (0,008 mol) 1,4,4-Trimethylpentyl-trichlorsilan als Katalysator eingesetzt. Bei einer Reaktion mit Wasser setzt dieses Silan 0,024 mmol Chlorwasserstoff frei.
- Anstelle von 3,0 g einer 50 Gew.-%-igen wässriger Natriumhydroxidlösung werden im Reaktionsschritt (R3) 4,7 g einer Natriummethanolatlösung in Methanol (0,026 mol NaOCH₃) eingesetzt.
- Auf einen Neutralisationsschritt (R5) wird verzichtet, da die Reaktionsmischung nach der Natriummethanolatzugabe in Reaktionsschritt (R3) bereits einen pH-Wert von 7 aufweist.

Die sonstige Reaktionsführung sowie der Reaktionsverlauf waren exakt identisch wie bei Beispiel 1 beschrieben.

### Charakterisierung des Endproduktes (Alkylsiliconharz (A)):

Das Endprodukt ist eine klare Flüssigkeit mit einer Viskosität, gemessen nach der in der Beschreibung angegebenen Methode, von 175 mPas.

Das Endprodukt wird mittels ¹H und ²⁹Si-NMR Verteilung analysiert, wobei der Gehalt an Ethoxygruppen, die Verteilung der Si-Einheiten auf die verschiedenen Kondensationsstufen, der Gehalt der im Produkt verbliebenen Silanolgruppen sowie der im Produkt verbliebene Gehalt an freiem Ethanol bestimmt wird. Dabei ergibt sich das folgende Ergebnis:

| | |
|---|---|
| Ethoxy-Gehalt: | 13,1 Gew.-% (bezogen auf das Gesamtgewicht des Endproduktes) |
| Methoxy-Gehalt: | 0,3 Gew.-% (bezogen auf das Gesamtgewicht des Endproduktes) |
| Silanol-Gehalt: | 174 ppm (berechnet als O_{1/2}H (Molgewicht = 9) bezogen auf das Gesamtgewicht des Endproduktes) |
| Ethanolgehalt: | 0,05 Gew.-% (bezogen auf das Gesamtgewicht des Endproduktes) |

Verteilung der Si-Einheiten auf die verschiedenen Kondensationsstufen:

| | | |
|---|---|---|
| Si(OR)₃-Einheiten: | 0,9 Mol-% | (monomeres Silan) |
| Si(OR)₂O_{1/2}-Einheiten: | 18,1 Mol-% | |
| Si(OR)O_{2/2}-Einheiten: | 55,8 Mol-% | |
| SiO_{3/2}-Einheiten: | 25,2 Mol-% | |

mit R = Ethyl- oder Methylrest.

### Vergleichsbeispiel 1: Nicht erfindungsgemäße Durchführung Reaktion (gemeinsame Zugabe von Säure (S) und Wasser):

Es werden dieselbe Apparatur, dieselbe Rezeptur und dieselben Chemikalien in denselben Mengen wie in Beispiel 1 verwendet. Allerdings werden die Salzsäure und das Wasser vor Reaktionsbeginn zusammengemischt und gemeinsam innerhalb von 30 min bei einer Reaktionstemperatur von 65 °C unter intensiver Rührung zu dem Trimethylpentyl-triethoxysilan dosiert. Die Reaktionsmischung wird direkt nach Beginn der Zugabe trüb. Eine Erwärmung der Reaktionsmischung ist nicht erkennbar. Es wird für 6 h bei 65 °C gerührt, wobei sich die Reaktionsmischung leicht bräunlich verfärbt.

Danach wird die Reaktion abgebrochen, auf Raumtemperatur abgekühlt, und die Reaktionsmischung wird über Nacht stehen gelassen.

Danach haben sich ca. 50 ml einer klaren oberen Phase abgesetzt, wohingegen die nach wie vor bräunlich verfärbte untere Phase unverändert trüb ist. Eine Analytik der beiden Phasen mittels ¹H-Analytik zeigt, dass die obere Phase im Wesentlichen aus Ethanol und monomerem Silan besteht, wohingegen die untere Phase aus monomeren Silan und dem oligomeren Zielprodukt in einem Molverhältnis von ca. 1:1 sowie aus geringen Mengen Ethanol besteht. Die Reaktion ist somit weit von einem vollständigen Umsatz entfernt. Die Reaktionsmischung wurde daraufhin verworfen.

### Vergleichsbeispiel 2: Nicht erfindungsgemäße Durchführung Reaktion (Zugabe von Säure (S) und Wasser in umgekehrter Reihenfolge):

Es werden dieselbe Apparatur, dieselbe Rezeptur und dieselben Chemikalien in denselben Mengen wie in Beispiel 1 verwendet. Allerdings werden hier zunächst das Wasser und das Trimethylpentyl-triethoxysilan unter intensiver Rührung vermischt, wobei sich die erhaltene Mischung eintrübt. Dann wird auf 65 °C erwärmt, und bei dieser Temperatur wird innerhalb von 20 min die 25-%ige Salzsäure unter intensiver Rührung zudosiert. Eine Erwärmung der Reaktionsmischung ist nicht erkennbar. Es wird für 6 h bei 65 °C gerührt, wobei sich die Reaktionsmischung leicht bräunlich verfärbt.

Danach wird die Reaktion abgebrochen, auf Raumtemperatur abgekühlt, und die Reaktionsmischung wird über Nacht stehen gelassen.

Am nächsten Tag zeigt sich im Wesentlichen dasselbe Ergebnis wie bei Vergleichsbeispiel 1.

### Vergleichsbeispiel 3: Nicht erfindungsgemäße Durchführung Reaktion (Einsatz eines basischen anstelle eines sauren Katalysators):

Es wird dieselbe Apparatur wie in Beispiel 1 verwendet.

In den Reaktionsschritten (R1) und (R2) eingesetzte Chemikalien:

| | | |
|---|---|---|
| • | 600,0 g | 1,4,4-Trimethylpentyl-triethoxysilan (2,17 mol) |
| • | 3,1 g | 30 Gew.-%ige Natriummethanolatlösung in Methanol (0,017 mol NaOCH₃) |
| • | 42,5 g | Wasser (2,36 mol) |

### Durchführung

600,0 g 1,4,4-Trimethylpentyl-triethoxysilan werden vorgelegt und auf 65 °C erwärmt. Bei dieser Temperatur werden 3,1 g 30 Gew.-%ige Natriummethanolatlösung in Methanol unter intensiver Rührung innerhalb von 20 min gleichmäßig zudosiert. Die Reaktionsmischung bleibt dabei klar, beginnt aber bereits 5 min nach Zugabebeginn, sich braun einzufärben. Nach Beendigung der Zugabe wird für 10 min bei 65 °C nachgerührt, wobei sich die Braunfärbung intensiviert.

Danach werden bei unveränderter Temperatur 42,5 g Wasser innerhalb von 30 min zudosiert. Direkt nach Beginn der Dosierung kommt es zu einer deutlichen Eintrübung der Reaktionsmischung. Es setzt eine sehr leichte exotherme Reaktion ein, durch die die Reaktionstemperatur um 2-4 °C auf 67-69 °C ansteigt. Eine Kühlung der Reaktionsmischung ist nicht erforderlich. Nach Dosierende wird die inzwischen dunkelbraune und nach wie vor trübe Reaktionsmischung für 5 h bei 65 °C nachgerührt.

Danach wird die Reaktion abgebrochen, auf Raumtemperatur abgekühlt, und die Reaktionsmischung wird über Nacht stehen gelassen.

Danach haben sich ca. 200 ml einer leicht bräunlich verfärbten oberen Phase abgesetzt, wohingegen die intensiv braun verfärbte untere Phase nach wie vor trüb ist. Eine Analytik der beiden Phasen mittels ¹H-Analytik zeigt, dass die obere Phase im Wesentlichen aus Ethanol und monomerem Silan besteht, wohingegen die untere Phase aus monomeren Silan und dem oligomeren Zielprodukt in einem Molverhältnis von ca. 1:2 sowie geringen Mengen Ethanol besteht. Die Reaktionsmischung wurde daraufhin verworfen.

### Vergleichsbeispiel 4: Nicht erfindungsgemäße Durchführung Reaktion (Einsatz eines basischen anstelle eines sauren Katalysators):

Es wird so vorgegangen wie in Vergleichsbeispiel 3, wobei anstelle von 3,1 g 30 Gew.-%iger Natriummethanolatlösung (0,017 mol NaOCH3) in Methanol 9,0 g (0,059 mol) DBU (1,8-Diazabicyclo[5.4.0]undec-7-en) als basischer Katalysator verwendet werden.

Auch hier bleibt die Reaktionsmischung während der Katalysatorzugabe klar. Eine Verfärbung tritt nicht auf. Mit Beginn der Wasserzugabe kommt es jedoch auch hier zu einer sofortigen Eintrübung der Reaktionsmischung. Eine Verfärbung hingegen tritt nicht ein. Eine exotherme Erwärmung der Reaktionsmischung lässt sich nicht beobachten.

Nach Abbruch der Reaktion nach Ende der 5-stündigen Nachrührzeit ist die Reaktionsmischung nach wie vor trüb. Über Nacht setzt sich nur eine sehr geringe Menge einer oberen Phase ab. Eine ¹H-Analytik der nach wie vor trüben unteren Reaktionsphase zeigt, dass deutlich mehr als die Hälfte des eingesetzten Alkoxysilans noch unverändert vorhanden ist. Der Ansatz wurde daraufhin verworfen.

### Beispiel 4: Erfindungsgemäße Durchführung der besonders bevorzugten Ausführungsform (AF2)

Es wird dieselbe Apparatur wie in Beispiel 1 verwendet.

In den Reaktionsschritten (R1) und (R2) eingesetzte Chemikalien:

| | | |
|---|---|---|
| • | 600,0 g | 1,4,4-Trimethylpentyl-triethoxysilan (2,17 mol) |
| • | 2,5 g | 25 Gew.-%ige wässrige Salzsäure (0,017 mol HCl, 0,104 mol H₂O) |
| • | 46,0 g | Wasser (2,56 mol) |

### Durchführung

600,0 g 1,4,4-Trimethylpentyl-triethoxysilan werden vorgelegt und auf 65 °C erwärmt. Bei dieser Temperatur werden 1,3 g 25 %-ige wässrige HCl unter intensiver Rührung innerhalb von 20 min gleichmäßig zudosiert, wobei sich die Reaktionsmischung zunächst leicht eintrübt (2-Phasensystem). Es wird für 10 min bei 65 °C nachgerührt, wobei die Reaktionsmischung wieder klar wird.

Danach werden bei unveränderter Temperatur 42,0 g Wasser innerhalb von 30 min zudosiert. Es setzt eine erkennbar exotherme Reaktion ein, durch die die Reaktionstemperatur auf ~70 °C ansteigt. Um die Temperatur auf 70 °C zu begrenzen, wird die Reaktionsmischung ab dem Erreichen dieser Temperatur gekühlt. Die Reaktionsmischung bleibt die gesamte Zeit über klar. Nach Dosierende wird für 60 min bei 65 °C nachgerührt.

Nach Austausch des Rückflusskühlers durch einen Claisen-Kühler mit kurzer Kolonne (ca. 1-2 Böden) werden die Leichtsieder bei einer Ölbadtemperatur von 120 °C und Normaldruck abdestilliert, bis kein weiteres Destillat mehr anfällt. Die Sumpftemperatur steigt dabei kontinuierlich bis auf 110 °C an. Dabei werden -220 g Destillat erhalten. Danach wird der Druck auf 10 mbar reduziert, wobei weitere ~4 g Destillat erhalten werden. Die erhaltene Reaktionsmischung enthält einen Chloridgehalt von 43 ppm.

Danach wird auf 65 °C abgekühlt, und bei dieser Temperatur werden 0,25 g 50 %-ige wässrige Natriumhydroxid-Lösung (0,003 mol) zugegeben, wobei die bis dahin glasklare Reaktionsmischung leicht opak wird. Direkt nach der Basenzugabe weist die Reaktionsmischung einen pH-Wert von 4 auf, der nach 5-minütigem Rühren auf ~6 und nach 10-minütigem Rühren auf 7 ansteigt. Insgesamt wird die Reaktionsmischung nach der Basenzugabe für 45 min bei 65 °C nachgerührt.

Danach werden die Leichtsieder bei einer Ölbadtemperatur von 120 °C und einem Druck von 5 mbar entfernt, wobei ~5 g Destillat erhalten werden. Nach -30 min fällt kein weiteres Destillat mehr an, und die Destillation wird beendet.

Es werden 403 g Rückstand in Form einer farblosen Flüssigkeit erhalten. Das Produkt zeigt eine ganz leichte Trübung, es setzt sich aber auch nach einer 14-tägigen Lagerung keine erkennbare Feststoffmenge ab.

### Charakterisierung des Endproduktes (Alkylsiliconharz (A)):

Das Endprodukt ist eine klare Flüssigkeit mit einer Viskosität, gemessen nach der in der Beschreibung angegebenen Methode, von 238 mPas.

Das Endprodukt wird mittels ¹H und ²⁹Si-NMR Verteilung analysiert, wobei der Gehalt an Ethoxygruppen, die Verteilung der Si-Einheiten auf die verschiedenen Kondensationsstufen, der Gehalt der im Produkt verbliebenen Silanolgruppen sowie der im Produkt verbliebene Gehalt an freiem Ethanol bestimmt wird. Dabei ergibt sich das folgende Ergebnis:

| | |
|---|---|
| Ethoxy-Gehalt: | 13,1 Gew.-% (bezogen auf das Gesamtgewicht des Endproduktes) |
| Silanol-Gehalt: | 338 ppm (berechnet als O_{1/2}H (Molgewicht = 9) bezogen auf das Gesamtgewicht des Endproduktes) |
| Ethanolgehalt: | 0,11 Gew.-% (bezogen auf das Gesamtgewicht des Endproduktes) |

Verteilung der Si-Einheiten auf die verschiedenen Kondensationsstufen:

| | |
|---|---|
| Si(OEt)₃-Einheiten: | 0,7 Mol-% (monomeres Silan) |
| Si(OEt)₂O_{1/2}-Einheiten: | 15,1 Mol-% |
| Si(OEt)O_{2/2}-Einheiten: | 54,4 Mol-% |
| SiO_{3/2}-Einheiten: | 29,8 Mol-% |

### Beispiel 5: Erfindungsgemäße, aber nicht bevorzugte Durchführung des erfindungsgemäßen Verfahrens.

Es wird genauso vorgegangen wie in Beispiel 1 mit den einzigen Unterschieden, dass auf die Natriumhydroxidzugabe (Reaktionsschritt (R3)) sowie auf die Neutralisierung des Endproduktes (Reaktionsschritt (R5)) verzichtet wird. Durchführung und Verlauf aller übrigen Reaktionsschritte erfolgt genau wie in Beispiel 1 beschrieben.

### Charakterisierung des Endproduktes (Alkylsiliconharz (A)):

Das Endprodukt ist eine klare Flüssigkeit mit einer Viskosität, gemessen nach der in der Beschreibung angegebenen Methode, von 125 mPas.

Das Endprodukt wird mittels ¹H und ²⁹Si-NMR Verteilung analysiert, wobei der Gehalt an Ethoxygruppen, der Gehalt der im Produkt verbliebenen Silanolgruppen sowie der im Produkt verbliebene Gehalt an freiem Ethanol bestimmt wird. Dabei ergibt sich das folgende Ergebnis:

| | |
|---|---|
| Ethoxy-Gehalt: | 14,3 Gew.-% (bezogen auf das Gesamtgewicht des Endproduktes) |
| Silanol-Gehalt: | 11.800 ppm (berechnet als O_{1/2}H (Molgewicht = 9) bezogen auf das Gesamtgewicht des Endproduktes) |
| Ethanolgehalt: | 0,21 Gew.-% (bezogen auf das Gesamtgewicht des Endproduktes) |

## Patentansprüche

1. Verfahren zur Herstellung von Alkylsiliconharzen (A) enthaltend mindestens 80 Gew.-% Einheiten der allgemeinen Formel (I)
R¹ₐ(R²O)_{b}(HO)_{d}R³_{c}SiO_{(4-a-b-c-d)/2} (I),
wobei
R¹ gleich oder verschieden sein kann und einen einwertigen, SiC-gebundenen, unsubstituierten oder substituierten aliphatischen Kohlenwasserstoffrest mit maximal 4 Kohlenstoffatomen bedeutet,
R² gleich oder verschieden sein kann und Wasserstoff oder einen einwertigen, unsubstituierten oder substituierten Kohlenwasserstoffrest mit maximal 4 Kohlenstoffatomen bedeutet,
R³ gleich oder verschieden sein kann und einen einwertigen, SiC-gebundenen, unsubstituierten oder substituierten Kohlenwasserstoffrest mit mindestens 5 Kohlenstoffatomen bedeutet,
a 0, 1, 2 oder 3 ist,
b 0, 1, 2 oder 3 ist und
c 0, 1 oder 2, ist, mit der Maßgabe, dass die Summe aus a+b+c kleiner oder gleich 3 ist und in mindestens 50 % der Einheiten der allgemeinen Formel (I) die Summe a+b gleich 0 oder 1 und in mindestens 40% der Einheiten der allgemeinen Formel (I) c gleich 1 ist,
d 0 oder 1 ist, und wobei der Gehalt an Alkoxygruppen R²O 3-20 Gew.-% beträgt,
bei dem Alkylalkoxysilan (A1) der allgemeinen Formel (II),
R¹ₐR³_{c}Si(OR²)_{(4-a-c)} (II),
wobei R¹, R², R³, a und c die oben genannten Bedeutungen aufweisen,
in einem ersten Reaktionsschritt (R1) wahlweise mit einer reinen Säure (S) mit einem pKₛ-Wert von maximal 5, einer mindestens 5 Gew.-%-igen wässrigen Lösung einer Säure (S) mit einem pKₛ-Wert von maximal 5 oder einer Halogensilanverbindung (A2) der allgemeinen Formel (III) vermischt wird,
R¹ₐR³_{c}Si(X)_{(4-a-c)} (III),
wobei X für ein Halogenatom steht, und R¹, R³, a und c die oben genannten Bedeutungen aufweisen,
und anschließend in mindestens einem weiteren Reaktionsschritt (R2) Wasser zugegeben wird.

2. Verfahren nach Anspruch 1, bei dem R¹ ausgewählt wird aus Methyl- und Ethylrest.

3. Verfahren nach einem der vorangehenden Ansprüche, bei dem R² ausgewählt wird aus Methyl- und Ethylrest.

4. Verfahren nach einem der vorangehenden Ansprüche, bei dem mindestens 90 Mol-% aller Reste R³ eine Alkylgruppe mit 8 bis 16 Kohlenstoffatomen bedeuten.

5. Verfahren nach einem der vorangehenden Ansprüche, bei dem die Alkylsiliconharze (A) mindestens 40 Einheiten der allgemeinen Formel (I) aufweisen, in denen a gleich 0 und c gleich 1 ist, jeweils bezogen auf die Gesamtzahl an Einheiten der allgemeinen Formel (I).

6. Verfahren nach einem der vorangehenden Ansprüche, bei dem nach den Reaktionsschritten (R1) und (R2) ein weiterer Reaktionsschritt (R3) folgt, bei dem eine Base (B) in einer Menge zugegeben wird, die größer ist als die Menge an Base (B), die notwendig wäre, um die zum Zugabezeitpunkt der Base (B) in der Reaktionsmischung vorhandene Menge an Säure (S) oder die zu diesem Zeitpunkt vorhandene, aus der Halogensilanverbindung (A2) freigesetzte Menge Halogenwasserstoff vollständig zu neutralisieren.

7. Verfahren nach Anspruch 6, bei dem die Base (B) ausgewählt wird aus Alkali- oder Erdalkalihydroxid oder - carbonat und Alkalialkoholat.

8. Verfahren nach einem der vorangehenden Ansprüche, bei dem der während des Verfahrens freigesetzte Alkohol R²OH in einem weiteren Verfahrensschritt (R4) destillativ teilweise oder vollständig entfernt wird.

9. Verfahren nach einem der Ansprüche 6 bis 8, bei dem der Reaktionsschritt (R3) durchgeführt wird, indem der Reaktionsmischung nach Abschluss der Reaktionsschritte (R1) und (R2) die Base (B) in einer Menge zugegeben wird, die größer ist als die Menge, die notwendig wäre, um die in Reaktionsschritt (R1) eingesetzte Säure (S) bzw. den aus dem in Reaktionsschritt 1 eingesetzten Halogensilanverbindung (A2) freigesetzten Halogenwasserstoff vollständig zu neutralisieren.

10. Verfahren nach Anspruch 9, bei dem das durch die Basenzugabe im Verfahrensschritt (R3) sowie gegebenenfalls auch in einem oder mehreren weiteren Neutralisationsschritten (R5) erhaltene Salz durch einen Filtrationsschritt (R6) entfernt wird.

11. Verfahren nach einem der Ansprüche 6 bis 7, bei dem in Reaktionsschritt (R1) eine Halogensilanverbindung (A2) oder eine Halogenwasserstoffsäure eingesetzt wird, während oder nach Abschluss von Reaktionsschritt (R2) mindestens 30% der in den vorangegangenen Reaktionsschritten freigesetzten Alkoholmenge (R²OH) destillativ entfernt wird, wobei der im Reaktionsgemisch befindliche Halogenwasserstoff zumindest teilweise mit abdestilliert, und anschließend im Verfahrensschritt (R3) die Base (B) in einer Menge zugegeben wird, die größer ist als die Menge, die notwendig wäre, um die in der Reaktionsmischung verbliebene Menge an Halogenwasserstoffsäure vollständig zu neutralisieren.

12. Verfahren nach Anspruch 11, bei dem während oder nach Abschluss von Reaktionsschritt (R2) mindestens 60% der in den vorangegangenen Reaktionsschritten freigesetzten Alkoholmenge (R²OH) destillativ entfernt wird.

13. Verfahren nach einem der Ansprüche 11 oder 12, bei dem der nach dem Verfahrensschritt (R3) der noch in der Reaktionsmischung vorhandene Alkohol R²OH in einem weiteren Destillationsschritt (R4) teilweise oder vollständig entfernt wird.

14. Verfahren nach einem der Ansprüche 11 bis 13, bei dem in Reaktionsschritt (R1) eine wässrige Chlorwasserstoffsäure mit einer Säurekonzentration von mindesten 5 Gew.-% oder die Chlorsilanverbindung (A2), d.h. eine Verbindung der Formel (III), in der X für ein Chloratom steht, eingesetzt werden.

15. Verfahren nach einem der vorangehenden Ansprüche, bei dem das hergestellte Alkylsiliconharz (A) einen Alkoholgehalt von maximal 2 Gew.-% aufweist.

## Claims

1. Process for producing alkyl silicone resins (A) containing at least 80 wt% of units of the general formula (I)
R²ₐ(R²O)_{b}(HO)_{d}R³_{c}Sio_{(4-a-b-c-d)/2} (I),
where
R¹ may be identical or different and is a monovalent, SiC-bonded, unsubstituted or substituted aliphatic hydrocarbon radical having not more than 4 carbon atoms,
R² may be identical or different and is hydrogen or a monovalent, unsubstituted or substituted hydrocarbon radical having not more than 4 carbon atoms,
R³ may be identical or different and is a monovalent, SiC-bonded, unsubstituted or substituted hydrocarbon radical having at least 5 carbon atoms,
a is 0, 1, 2 or 3,
b is 0, 1, 2 or 3 and
c is 0, 1 or 2, with the proviso that the sum of a+b+c is less than or equal to 3 and in at least 50% of the units of the general formula (I) the sum of a+b is 0 or 1 and in at least 40% of the units of the general formula (I) c is 1,
d is 0 or 1, and
where the content of alkoxy groups R²O is 3-20 wt%, where alkylalkoxysilane (A1) of the general formula (II)
R¹ₐR³_{c}Si(OR²)_{(4-a-c)} (II),
where R¹, R², R³, a and c have the definitions stated above,
is mixed in a first reaction step (R1) alternatively with a pure acid (S) having a pKₐ of not more than 5, with an at least 5 wt% aqueous solution of an acid (S) having a pKₐ of not more than 5 or with a halosilane compound (A2) of the general formula (III)
R¹ₐR³_{c}Si(X)_{(4-a-c)} (III),
where X is a halogen atom and R¹, R³, a and c have the definitions stated above,
and subsequently in at least one further reaction step (R2) water is added.

2. Process according to Claim 1, wherein R¹ is selected from methyl and ethyl radical.

3. Process according to either of the preceding claims, wherein R² is selected from methyl and ethyl radical.

4. Process according to any of the preceding claims, wherein at least 90 mol% of all the radicals R³ are an alkyl group having 8 to 16 carbon atoms.

5. Process according to any of the preceding claims, wherein the alkyl silicone resins (A) have at least 40 units of the general formula (I) in which a is 0 and c is 1, based in each case on the total number of units of the general formula (I).

6. Process according to any of the preceding claims, wherein reaction steps (R1) and (R2) are followed by a further reaction step (R3) in which a base (B) is added in an amount greater than the amount of base (B) that would be needed in order to fully neutralize the amount of acid (S) present in the reaction mixture at the moment of addition of the base (B) or the amount of hydrogen halide liberated from the halosilane compound (A2) and present at that moment.

7. Process according to Claim 6, wherein the base (B) is selected from alkali metal or alkaline earth metal hydroxide or carbonate and alkali metal alkoxide.

8. Process according to any of the preceding claims, wherein the alcohol R²OH liberated during the process is partially or completely removed distillatively in a further process step (R4).

9. Process according to any of Claims 6 to 8, wherein reaction step (R3) is carried out by adding the base (B) to the reaction mixture, on conclusion of reaction steps (R1) and (R2), in an amount greater than the amount that would be needed in order to fully neutralize the acid (S) used in reaction step (R1) or the hydrogen halide liberated from the halosilane compound (A2) used in reaction step 1.

10. Process according to Claim 9, wherein the salt obtained by the addition of base in process step (R3) and also, optionally, in one or more further neutralization steps (R5) as well is removed by a filtration step (R6).

11. Process according to either of Claims 6 and 7, wherein, in reaction step (R1), a halosilane compound (A2) or a hydrohalic acid is used, during or on conclusion of reaction step (R2) at least 30% of the amount of alcohol (R²OH) liberated in the preceding reaction steps is removed distillatively, with the hydrogen halide present in the reaction mixture being distilled off as well at least partially, and subsequently in process step (R3) the base (B) is added in an amount greater than the amount that would be needed in order to fully neutralize the amount of hydrohalic acid remaining in the reaction mixture.

12. Process according to Claim 11, wherein, during or on conclusion of reaction step (R2), at least 60% of the amount of alcohol (R²OH) liberated in the preceding reaction steps is removed distillatively.

13. Process according to either of Claims 11 and 12, wherein the alcohol R²OH still present in the reaction mixture after process step (R3) is partially or completely removed in a further distillation step (R4).

14. Process according to any of Claims 11 to 13, wherein, in reaction step (R1), an aqueous hydrochloric acid having an acid concentration of at least 5 wt% or the chlorosilane compound (A2), i.e., a compound of the formula (III), in which X is a chlorine atom, is used.

15. Process according to any of the preceding claims, wherein the alkyl silicone resin (A) produced has an alcohol content of not more than 2 wt%.

## Revendications

1. Procédé de préparation de résines d'alkylsilicone (A) contenant au moins 80 % en poids de motifs de formule générale (I)
R¹ₐ(R²O)_{b}(HO)_{d}R³_{c}SiO_{(4-a-b-c-d)/2} (I),
dans laquelle
R¹ peut être identique ou différent et signifie un radical hydrocarboné aliphatique monovalent, substitué ou non substitué, lié à SiC, comportant au maximum 4 atomes de carbone,
R² peut être identique ou différent et signifie hydrogène ou un radical hydrocarboné monovalent, substitué ou non substitué, comportant au maximum 4 atomes de carbone,
R³ peut être identique ou différent et signifie un radical hydrocarboné monovalent, substitué ou non substitué, lié à SiC, comportant au moins 5 atomes de carbone,
a vaut 0, 1, 2 ou 3,
b vaut 0, 1, 2 ou 3, et
c vaut 0, 1 ou 2, à condition que la somme a + b + c soit inférieure ou égale à 3 et que dans au moins 50 % des motifs de formule générale (I), la somme a + b soit égale à 0 ou 1 et que dans au moins 40 % des motifs de formule générale (I), c soit égal à 1,
d vaut 0 ou 1, et
dans laquelle la teneur en groupes alcoxy R²O est de 3 à 20 % en poids,
dans lequel l'alkylalcoxysilane (A1) de formule générale (II),
R¹ₐR³_{c}Si(OR²)_{(4-a-c)} (II),
dans laquelle R¹, R², R³, a et c sont tels que définis ci-dessus,
est mélangé, dans une autre étape réactionnelle (R1), facultativement à un acide pur (S) comportant une valeur de pKₐ d'au maximum 5, à une solution aqueuse à au moins 5 % en poids d'un acide (S) comportant une valeur de pKₐ d'au maximum 5 ou à un composé halogénosilane (A2) de formule générale (III),
R¹ₐR³_{c}Si(X)_{(4-a-c)} (III),
dans laquelle X signifie un atome d'halogène, et R¹, R³, a et c sont tels que définis ci-dessus,
et de l'eau est ensuite ajoutée dans au moins une autre étape réactionnelle (R2).

2. Procédé selon la revendication 1, dans lequel R¹ est choisi parmi un radical méthyle et éthyle.

3. Procédé selon l'une quelconque des revendications précédentes, dans lequel R² est choisi parmi un radical méthyle et éthyle.

4. Procédé selon l'une quelconque des revendications précédentes, dans lequel au moins 90 % en moles de tous les radicaux R³ signifient un groupe alkyle comportant 8 à 16 atomes de carbone.

5. Procédé selon l'une quelconque des revendications précédentes, dans lequel les résines d'alkylsilicone (A) présentent au moins 40 motifs de formule générale (I), dans lesquelles a vaut 0 et c vaut 1, respectivement par rapport au nombre total de motifs de formule générale (I).

6. Procédé selon l'une quelconque des revendications précédentes, dans lequel les étapes réactionnelles (R1) et (R2) sont suivies d'une autre étape réactionnelle (R3) dans laquelle une base (B) est ajoutée en une quantité qui est supérieure à la quantité de base (B) qui serait nécessaire pour neutraliser entièrement la quantité d'acide (S) présente dans le mélange réactionnel au moment d'ajouter la base (B) ou à la quantité d'halogénure d'hydrogène libérée par le composé halogénosilane (A2) et présente à ce moment.

7. Procédé selon la revendication 6, dans lequel la base (B) est choisie parmi un hydroxyde ou carbonate de métal alcalin ou de métal alcalino-terreux et un alcoolate alcalin.

8. Procédé selon l'une quelconque des revendications précédentes, dans lequel l'alcool R²OH libéré durant le procédé est éliminé partiellement ou totalement par distillation dans une autre étape de procédé (R4).

9. Procédé selon l'une quelconque des revendications 6 à 8, dans lequel l'étape réactionnelle (R3) est réalisée en ajoutant la base (B) au mélange réactionnel après la fin des étapes réactionnelles (R1) et (R2), en une quantité qui est supérieure à la quantité qui serait nécessaire pour neutraliser entièrement l'acide (S) utilisé dans l'étape réactionnelle (R1) ou l'halogénure d'hydrogène libéré par le composé halogénosilane (A2) utilisé dans l'étape réactionnelle 1.

10. Procédé selon la revendication 9, dans lequel le sel obtenu en ajoutant la base dans l'étape de procédé (R3) et aussi, facultativement, dans une ou plusieurs autres étapes de neutralisation (R5), est éliminé par une étape de filtration (R6).

11. Procédé selon l'une quelconque des revendications 6 à 7, dans lequel, dans l'étape réactionnelle (R1), on utilise un composé halogénosilane (A2) ou un acide halogénohydrique, pendant ou à la fin de l'étape réactionnelle (R2) au moins 30 % de la quantité d'alcool (R²OH) libérée dans les étapes réactionnelles précédentes sont éliminés par distillation, l'halogénure d'hydrogène présent dans le mélange réactionnel étant éliminé au moins partiellement par distillation, et consécutivement dans l'étape de procédé (R3), la base (B) est ajoutée en une quantité supérieure à la quantité qui serait nécessaire pour neutraliser entièrement la quantité d'acide halogénohydrique restant dans le mélange réactionnel.

12. Procédé selon la revendication 11, dans lequel, pendant ou après la fin de l'étape réactionnelle (R2) au moins 60 % de la quantité d'alcool (R²OH) libérée dans les étapes réactionnelles précédentes sont éliminés par distillation.

13. Procédé selon l'une quelconque des revendications 11 ou 12, dans lequel l'alcool R²OH encore présent dans le mélange réactionnel après l'étape de procédé (R3) est partiellement ou entièrement éliminé dans une autre étape de distillation (R4).

14. Procédé selon l'une quelconque des revendications 11 à 13, dans lequel, dans l'étape réactionnelle (R1), on utilise un acide chlorhydrique aqueux comportant une concentration d'acide d'au moins 5 % en poids ou le composé chlorosilane (A2), c'est-à-dire un composé de formule (III), dans lequel X représente un atome de chlore.

15. Procédé l'une quelconque des revendications précédentes, dans lequel la résine d'alkylsilicone (A) préparée comporte une teneur en alcool d'au maximum 2 % en poids.
